# EUROPÄISCHE PATENTANMELDUNG

(11) **EP 1 389 688 A1**
(43) Veröffentlichungstag der Anmeldung: **18.02.2004**
(21) Anmeldenummer: 03017834.7
(22) Anmeldetag: 05.08.2003
(51) Int. Cl.: F16B 5/02, F16B 5/00, F16B 5/06, E04F 11/18, E05B 1/00

(54) **Befestigungswinkel für einen strangförmigen Halter**

(30) Priorität: 09.08.2002 DE 20212296 U
(71) Anmelder: Horst Filipp GmbH, 32130 Enger-Oldinghausen (DE)
(72) Erfinder: Filipp, Horst, 33790 Halle (DE)
(74) Vertreter: Dantz, Jan Henning

(57) **Zusammenfassung**

Ein Befestigungswinkel für einen stangenförmigen Halter (2), wobei der erste Schenkel (7) des Befestigungswinkels, an einer der Stirnseiten des Halters (2) anliegend, mittels einer Schraube (9), die in einer Schraubenkopfaufnahme (3) bündig einliegt, mit dem Halter (2) verbunden ist, ist so ausgestaltet, daß der erste Schenkel (7) auf seiner der Schraubenkopfaufnahme (3) gegenüberliegenden Seite eine weitere Schraubenkopfaufnahme (4) aufweist.

## Beschreibung

Die vorliegende Erfindung betrifft einen Befestigungswinkel für einen stangenförmigen Halter gemäß dem Oberbegriff des Anspruchs 1.

Mit Hilfe solcher Befestigungswinkel werden Halter in mannigfaltiger Ausführung und Funktion ortsfest angebracht. Dabei dienen solche Halter als beispielsweise Türgriffe, insbesondere im gewerblichen Bereich, als Handläufe allgemeiner Art oder dergleichen.

Üblicherweise stehen die beiden Schenkel jedes Befestigungswinkels rechtwinklig zueinander, so dass der Halter selbst parallel zu dem Bauteil verläuft, an dem er befestigt werden soll.

Diese Befestigung erfolgt gleichfalls mittels Schrauben, vorzugsweise Senkkopfschrauben, die durch eine Bohrung des zweiten Schenkels geführt sind und in einer Schraubenkopfaufnahme liegen.

Insbesondere aus funktionalen Gründen kann es erforderlich sein, die beiden Befestigungswinkel so anzuordnen, dass die beiden zweiten Schenkel aufeinander zu gerichtet oder voneinander fort verlaufend angeordnet werden.

Allerdings sind die bekannten Befestigungswinkel nicht geeignet in beiden Fällen eingesetzt zu werden, da die Schraubenkopfaufnahme bei Einsatz in nicht vorbestimmter Funktion auf der dem Halter zugewandten Seite platziert ist.

Bislang werden deshalb verschiedene Befestigungswinkel hergestellt und bereit gehalten, bei denen die Schraubenkopfaufnahme im Verbindungsbereich mit dem Halter entweder auf der dem zweiten Schenkel zugewandten Seite oder, im anderen Fall gegenüberliegend angeordnet ist.

Naturgemäß ist eine solche quasi Doppelfertigung mit erheblichen Kosten verbunden, die zum einen aus der Fertigung selbst resultieren, zum anderen aber auch aus der zusätzlichen Lagerhaltung.

Da es sich bei solchen Befestigungswinkeln um Artikel handelt, die in großen Stückzahlen hergestellt werden, kommt diesem nachteiligen Umstand eine erhebliche wirtschaftliche Bedeutung zu.

Der vorliegenden Erfindung liegt daher die Aufgabe zugrunde, einen Befestigungswinkel der gattungsgemäßen Art so weiter zu entwickeln, dass er mit konstruktiv einfachsten Mitteln universell verwendbar ist.

Diese Aufgabe wird durch einen Befestigungswinkel gelöst, der die Merkmale des Anspruchs 1 aufweist.

Ein solcher Art gestalteter Befestigungswinkel ist nun im wesentlichen für alle vorkommenden Anschlussarten geeignet, d.h., sowohl für eine Anbringung am Halter, bei der der zweite Schenkel nach innen gerichtet ist wie auch für eine Anwendung, bei der er nach außen verläuft.

Vorzugsweise bestehen die Schraubenkopfaufnahmen aus beidseitigen Senkungen, die bis zur neutralen Faser des aus Flachmaterial bestehenden Befestigungswinkel geführt sind.

Nach einer vorteilhaften Weiterbildung der Erfindung kann am zweiten Schenkel des Befestigungswinkels gegenüber der Schraubenkopfaufnahme ebenfalls eine weitere vorgesehen sein, was dann besonders sinnvoll ist, wenn die beiden Schenkel des Befestigungswinkels gleichlang oder nahezu gleichlang sind.

Weiter kann vorgesehen sein, dass vorzugsweise der erste Schenkel kreisbogenförmig gestaltet ist, so dass der zweite Schenkel über die Projektion des Halters vorsteht.

Auch hierbei sind die Befestigungswinkel wahlweise so mit dem Halter zu verbinden, dass der zweite Schenkel entweder nach außen oder nach innen weist. Denkbar ist auch den zweiten Schenkel eines Befestiguhgswinkels nach außen zu richten und den anderen nach innen, was sowohl funktional als auch gestalterisch sinnvoll sein kann.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: Einen erfindungsgemäßen Befestigungswinkel in einer geschnittenen Seitenansicht,
- Figur 2: den Befestigungswinkel in einer Vorderansicht,
- Figur 3: an einen Halter montierte Befestigungswinkel in einer teilweise geschnittenen Seitenansicht,
- Figuren 4 - 6: jeweils unterschiedliche Montagepositionen der Befestigungswinkel an dem Halter,
- Figur 7: ein weiteres Ausführungsbeispiel eines Befestigungswinkels in einer Seitenansicht.

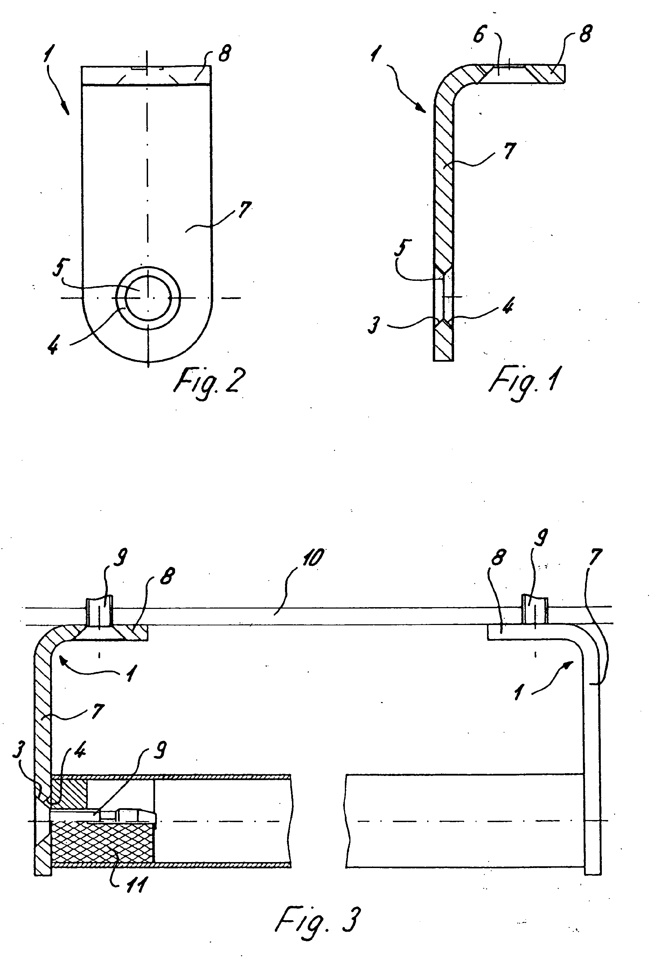

In den Figuren 1 und 2 ist ein Befestigungswinkel für einen stangenförmigen Halter 3, wie er in den Figuren 3 bis 6 gezeigt ist, dargestellt.

Dabei ist der Befestigungswinkel mittels einer Schraube 9, im vorliegenden Ausführungsbeispiel einer Senkkopfschraube, mit dem Halter 2 verbunden, wozu, wie in der Figur 3 sehr deutlich erkennbar ist, in den als Rohr ausgebildeten Halter 2 einseitig Dübel 11 eingesetzt sind, in die unter Aufspreizung die Schrauben 9 eingedreht sind, so dass der Halter 2 sicher gehalten wird.

Erfindungsgemäß weist der erste Schenkel 7 des Befestigüngswinkels 1, der an der Stirnseite des Halters 2 anliegt, beidseitig Schraubenkopfaufnahmen 3, 4 auf, die als Senkung ausgebildet sind und durch die der Schraubenkopf der Schraube 9 so einliegt, dass ein flächenbündiger Übergang zu der Umgebungsfläche des ersten Schenkels 7 besteht.

Mittels einer weiteren Schraube 9, die durch eine Durchgangsbohrung 6 des zweiten Schenkels 8 des Befestigungswinkels 1 geführt ist, ist der jeweilige Befestigungswinkel 1 an einem Bauteil 10 festgelegt. Dies kann beispielsweise das Türblatt einer Tür sein, wenn der Halter 2 als Handgriff Nutzung findet, eine ortsfeste Wand, bei Nutzung des Halters 2 als beispielsweise Haltegriff im Bereich einer Badewanne oder bei Nutzung des Halters 2 als Toilettenpapierhalter. In diesem Fall sind die Schrauben 9, mit denen die Befestigungswinkel 1 am Halter 2 festgelegt sind, so auszubilden, dass zum Wechsel von Toilettenpapierrollen der Halter 2 problemlos entnehmbar ist, ohne dass eine Lösung mittels Werkzeug erforderlich ist.

Die beiden Schraubenaufnahmen 3, 4 des ersten Schenkels 7 sind in Ihrer Tiefe so bemessen, dass eine Durchgangsbohrung 5, durch die die Schraube 9 geführt ist, im gemeinsamen angrenzenden Bereich gebildet wird. Dabei entspricht die Tiefe der jeweiligen Schraubenkopfaufnahme 3, 4 der Hälfte der Materialdicke des Befestigungswinkels 1 bzw. des ersten Schenkels7.

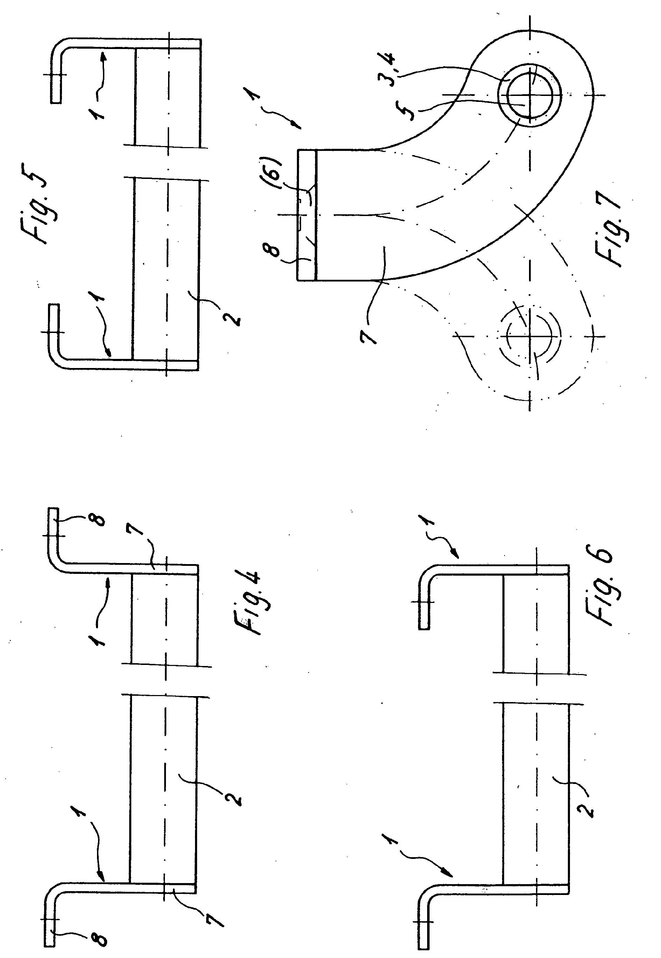

In den Figuren 4 bis 6 sind Montagebeispiele der Befestigungswinkel 1 gezeigt, wobei die Ausrichtung der Befestigungswinkel 1 in der Figur 5 der Ausrichtung nach Figur 3 entspricht, in der die zweiten Schenkel 8 der beiden Befestigungswinkel 1 aufeinander zugerichtet verlaufen.

Durch die beidseitigen Schraubenkopfaufnahmen 3, 4 können gleiche Winkel für unterschiedliche Montagepositionen eingesetzt werden, wie sie beispielhaft des weitem in den Figuren 4 und 6 gezeigt sind. In der Figur 4 verlaufen die beiden zweiten Schenkel 8 entgegengesetzt nach außen gerichtet, während die Ausrichtung gemäß der Figur 6 gleichgerichtet ist. In jedem Fall ist ein Befestigungswinkel 1 für alle Befestigungspositionen geeignet.

Ein weiteres Ausführungsbeispiel eines Befestigungswinkels 1 ist in der Figur 7 dargestellt. Hierbei ist der erste Schenkel 7 kreisbogenförmig ausgebildet, so dass der zweite Schenkel 8, der beispielsweise mit dem Bauteil 10 verbindbar ist, außerhalb des projizierten Überdeckungsbereiches des Halters 3 liegt.

Auch hier sind beidseitig des ersten Schenkels 7 Schraubenkopfaufnahmen 3, 4 vorgesehen, so dass eine seitenunabhängige Verwendbarkeit des Befestigungswinkels 1 gegeben ist. Aufgrund der kreisbogenförmigen Ausbildung des ersten Schenkels 7 sind jedoch zur gleichgerichteten, symmetrischen Befestigung der Befestigungswinkel 1 am Halter 2 die ersten Schenkel jeweils in unterschiedliche Richtungen gebogen, was strichpunktiert als zweiter Befestigungswinkel 1 in der Figur 7 dargestellt ist.

## Patentansprüche

1. Befestigungswinkel für einen stangenförmigen Halter (2), wobei der erste Schenkel (7) des Befestigungswinkels, an einer der Stirnseiten des Halters (2) anliegend, mittels einer Schraube (9), die in einer Schraubenkopfaufnahme (3) bündig einliegt, mit dem Halter (2) verbunden ist, **dadurch gekennzeichnet, dass** der erste Schenkel (7) auf seiner der Schraubenkopfaufnahme (3) gegenüberliegenden Seite eine weitere Schraubenkopfaufnahme (4) aufweist.

2. Befestigungswinkel nach Anspruch 1, **dadurch gekennzeichnet, dass** der zweite Schenkel (8) ebenfalls beidseitig Schraubenkopfaufnahmen aufweist.

3. Befestigungswinkel nach Anspruch 1, **dadurch gekennzeichnet, dass** der erste Schenkel (7) kreisbogenförmig gestaltet ist.

4. Befestigungswinkel nach Anspruch 1 oder 2, **dadurch gekennzeichnet, dass** die Schraubenkopfaufnahme (3, 4) als Senkungen für Senkkopfschrauben ausgebildet sind.

5. Befestigungswinkel nach einem der Ansprüche 1 bis 4, **dadurch gekennzeichnet, dass** jede Schraubenkopfaufnahme (3, 4) in ihrer Tiefe der halben Materialstärke des zugeordneten Schenkels (7, 8) entspricht.

6. Befestigungswinkel nach einem der Ansprüche 1 bis 5, **dadurch gekennzeichnet, dass** die Schraubenkopfaufnahmen (3, 4) in ihrer Form und Größe gleich sind.
